# FASCICULE DE BREVET EUROPEEN

(11) **EP 3 027 442 B1**
(45) Date de publication et mention de la délivrance du brevet: **02.09.2020**
(21) Numéro de dépôt: 14755862.1
(22) Date de dépôt: 11.07.2014
(51) Int. Cl.: B60G 9/00, F16F 9/38, F16F 9/54, B60G 15/06

(54) **TRAIN DE ROULEMENT POUR UN VÉHICULE AUTOMOBILE**
ANTRIEBSSTRANG FÜR EIN KRAFTFAHRZEUG
DRIVE TRAIN FOR A MOTOR VEHICLE

(30) Priorité: 30.07.2013 FR 1357522
(43) Date de publication de la demande: 08.06.2016
(73) Titulaire: Renault S.A.S., 92100 Boulogne-Billancourt (FR)
(72) Inventeur: PREGEANT, Marie-Neige, 72100 Le Mans (FR); JACOB, Michaël, 72330 Oize (FR); GUYON, Marion, 78000 Versailles (FR); THOMAS, Frédéric, 28210 Nogent-le-roi (FR)
(86) Numéro de dépôt international: PCT/FR2014/051786
(87) Numéro de publication internationale: WO 2015/015082

(56) Documents cités:
- WO-A1-2013/083896
- CN-A- 101 353 004
- GB-A- 2 229 681
- GB-A- 2 345 274
- JP-A- 2003 112 508
- JP-A- 2004 322 707
- JP-A- 2005 053 321
- US-A- 4 813 507

## Description

### DOMAINE TECHNIQUE DE L'INVENTION

Le domaine technique de l'invention est celui des véhicules automobiles et en particulier des trains arrière de véhicule automobile.

### ETAT DE LA TECHNIQUE ANTERIEURE

L'architecture de certains véhicules impose que ces dits véhicules présentent un plancher bas, tout en conservant un volume intérieur optimal dans l'habitacle et/ou le coffre.

Pour résoudre de telles contraintes, une solution est d'agencer l'architecture pour que le train de roulement se situe sensiblement au niveau d'une garde au sol du véhicule.

Toutefois, de tels trains de roulement présentent notamment l'inconvénient qu'aucun élément du dessous de caisse du véhicule ne protège le train de roulement. En effet, dans le cas d'un train arrière par exemple, ni un pare choc, ni une poutre arrière ne peut protéger le train de roulement.

Dans ces conditions, la présence d'un obstacle sur la route peut facilement engendrer une défaillance du train arrière en entrant en collision avec celui-ci, par exemple lors de marche arrière du véhicule. Le document US4813507A divulgue un train de roulement intégrant une protection d'un corps d'essieu, et le document JP2003112508A divulgue une protection de support d'amortisseur. Le document CN101353004 A, qui divulgue le préambule de la revendication 1, et le document JP2004322707 divulguent des trains de roulement comprenant une protection du support d'amortisseur.

### EXPOSE DE L'INVENTION

Le dispositif décrit par la suite vise à remédier à tout ou partie des inconvénients de l'état de la technique et notamment à réaliser de manière simple et fiable un train de roulement pour un véhicule automobile permettant de limiter les dégats en cas de collision avec un obstacle qui serait susceptible d'engendrer sa défaillance.

Pour ce faire, est proposé selon un premier aspect de l'invention un train de roulement pour un véhicule automobile destiné à rouler suivant une direction longitudinale sur une chaussée, le train de roulement compred au moins une pièce à protéger d'un obstacle extérieur, le train de roulement étant caractérisé en ce qu'il comprend un déflecteur pour protéger ladite pièce de toute collision avec l'obstacle extérieur, ledit déflecteur présentant :
- une base formant interface de solidarisation pour sa solidarisation audit train de roulement ; et
- au moins une surface de protection formant bouclier par rapport à la pièce à protéger, ladite surface de protection étant orientée vers la direction longitudinale et vers la chaussée, la pièce à protéger étant un vérin amortisseur et le déflecteur formant une chape pour recevoir une extrémité du vérin amortisseur, caractérisé en ce que le déflecteur comporte une pièce de renfort, la pièce de renfort permettant de renforcer le déflecteur dans sa tenue mécanique en cas de collision avec l'obstacle extérieur, la pièce de renfort présentant deux ailes reliées entre elles par une paroi transversale, les ailes formant une rampe d'appui pour la surface de protection.

Dans une telle configuration, lorsque le véhicule se déplace suivant la direction longitudinale et du fait que la surface de protection étant orientée vers la direction longitudinale, un obstacle qui se trouverait sur un chemin du déflecteur viendrait alors le percuter au niveau de sa surface de protection formant bouclier protégeant par conséquent le train de roulement.

Cette chape peut par exemple être formée par la base et les parois latérales du déflecteur, lesdites parois latérales portant une ou plusieurs surfaces de protection et disposées en regard l'une de l'autre présentant chacune un orifice débouchant de sorte à pouvoir y insérer le vérin amortisseur en liaison pivot.

Dans une telle configuration, le déflecteur offre une protection améliorée du vérin amortisseur

Par ailleurs, cette surface de protection étant en outre orientée vers la chaussée, cela permet en cas de collision contre un obstacle fixe par rapport à la chaussée, par exemple un plot urbain ou un nid de poule, de diriger au moins en partie une composante de la force résultante suivant une direction verticale, étant entendu par un axe vertical, un axe sensiblement orthogonal à la chaussée.

Par conséquent, lorsque le déflecteur entre en contact avec un tel obstacle extérieur fixe, le train de roulement pourra passer par dessus l'obstacle.

Ceci permet de protéger efficacement au moins certains éléments sensibles du train de roulement et ainsi d'éviter une déformation de ces éléments limitant par conséquent la dégradation de sa tenue en cas de collision contre un tel obstacle.

Avantageusement, le train de roulement forme un train arrière du véhicule.

Une telle caractéristique est particulièrement avantageuse, notamment du fait que le volume intérieur généralement à optimiser se trouve à l'arrière du véhicule. En effet le gain de place souhaité au niveau du coffre tend généralement à concevoir des trains arrière de plus en plus près de la chaussée.

Par ailleurs, et selon une autre caractéristique avantageuse, le train de roulement comprend un essieu, le déflecteur étant solidaire dudit essieu. En particulier, on prévoit que le déflecteur se superpose sur le support amortisseur du train roulant. Une vis et un écrou viennent ainsi serrer l'ensemble amortisseur, essieu et le déflecteur.

Avantageusement encore, le déflecteur comprend une paroi arrière formant base et deux surfaces de protection, chacune des surfaces de protection étant portée par une paroi latérale reliée rigidement à la base.

Selon une autre caractéristique particulière, le déflecteur est formé en un seul tenant. Cela permet notamment de diminuer le coût de fabrication du déflecteur sans en altérer sa résistance mécanique.

Selon l'invention, le déflecteur comporte une pièce de renfort, la pièce de renfort présentant deux ailes reliées entre elles par une paroi transversale, les ailes formant une rampe d'appui pour la surface de protection.

Une telle pièce de renfort offre l'avantage de renforcer le déflecteur et d'offrir une meilleure résistance au choc lors de la collision.

De préférence, la pièce de renfort est soudée au déflecteur, ceci permettant d'offrir une meilleure tenue mécanique peu coûteuse.

Avantageusement, la surface de protection est plane. Ceci permet de rediriger les efforts suivant une composante verticale de façon similaire quelque soit la hauteur de l'obstacle, ceci à vitesse de collision de l'obstacle équivalente.

Par ailleurs, selon une autre caractéristique technique, le déflecteur est amovible par rapport audit train de roulement. Cela permet notamment en cas d'endommagement du déflecteur, de pouvoir assurer son changement sans avoir à changer le train de roulement complet.

De préférence la pièce à protéger est un flasque pour un ressort de suspension.

Avantageusement, la base présente une saillie de fixation destinée à coopérer avec le flasque formant butée d'un ressort du train de roulement. Ceci permet de protéger le flasque d'au moins une partie des efforts résultants de la collision. En effet, une partie des efforts est redirigée suivant une composante verticale, diminuant la composante horizontale dans le plan de la chaussée. Par ailleurs, le train de roulement du véhicule présentant un système d'amortissement, cette composante verticale est alors amortie.

Selon une caractéristique particulière, la saillie de fixation est dirigée dans une direction sensiblement opposée au vérin amortisseur.

Ceci permet notamment au déflecteur de pouvoir être maintenu de force par le vérin amortisseur en prise avec le flasque du ressort de suspension. Plus précisément, le déflecteur peut être maintenu par une vis et un écrou sur le train roulant. Il est ainsi monté sur le support amortisseur du train qui est lui-même soudé sur le flasque ressort.

Est également proposé selon un autre aspect de l'invention un véhicule automobile comprenant un train de roulement comportant tout ou partie des caractéristiques mentionnées ci avant.

L'invention est décrite dans ce qui précède à titre d'exemple. Il est entendu que l'homme du métier est à même de réaliser différentes variantes de réalisation de l'invention, par exemple en associant différentes caractéristiques prises seules ou en combinaison en fonction de son besoin, sans pour autant sortir du cadre de l'invention.

### BREVE DESCRIPTION DES FIGURES

D'autres caractéristiques et avantages de l'invention ressortiront à la lecture de la description qui suit, donnée uniquement à titre d'exemple, en référence aux figures annexées, qui illustrent :
- figure 1, un schéma de principe d'un train de roulement selon un mode de réalisation ;
- figure 2 ; une vue en perspective d'un train de roulement selon un mode de réalisation ;
- figure 3, une vue en perspective d'une partie d'un train de roulement selon ce mode de réalisation ;
- figure 4, une vue en perspective d'un déflecteur selon un mode de réalisation de l'invention.

Pour plus de clarté, les éléments identiques ou similaires sont repérés par des signes de référence identiques sur l'ensemble des figures.

### DESCRIPTION DETAILLEE D'UN MODE DE REALISATION

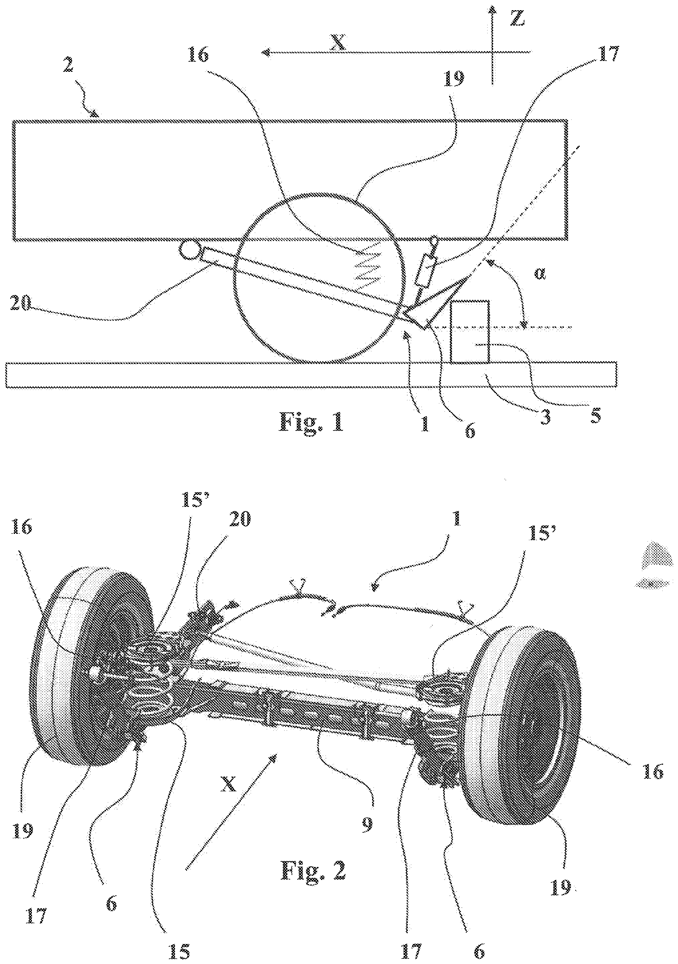

La figure 1 illustre un schéma de principe d'un train de roulement selon un mode de réalisation sur lequel est schématisée une partie arrière d'une caisse de véhicule 2 automobile.

Le train de roulement 1 ici représenté est un train arrière de ce véhicule 2 automobile. Le véhicule 2 est représenté roulant sur une chaussée 3 suivant une direction longitudinale X, le sens de la flèche indiquant le sens d'une marche avant du véhicule 2, le véhicule 2 étant ici schématisé roulant en marche arrière.

Un axe vertical Z est défini par la suite comme un axe sensiblement perpendiculaire à la chaussée 3.

Le train de roulement 1 présente un essieu 9 (non visible sur ce schéma) fixé à ses deux extrémités à des bras oscillants 20, lesquels sont en liaison pivot avec la caisse de la voiture 2. Latéralement à l'essieu sont prévues des roues 19 de la voiture 2 assurant l'adhérence du véhicule 2 avec la chaussée 3. En d'autres termes, chaque roue 19 est montée vers une extrémiité de l'essieu 9.

Le train de roulement 1 comporte un système de suspension par rapport à la caisse du véhicule 2, lequel comporte de part et d'autre de l'essieu 9 et au voisinage de chacun des bras oscillants : un ressort de suspension 16 et un vérin amortisseur 17, chacun dressé sensiblement suivant une direction verticale Z entre le train de roulement et la caisse du véhicule 2 de sorte à amortir les sollicitations mécaniques principalement verticales transmises du train de roulement par les roues 19 vers la caisse du véhicule 2. Chaque ressort de suspension est positionné à une distance plus proche de la liaison pivot que le vérin amortisseur associé.

Le train de roulement 1, ici le train arrière du véhicule 2, comporte un déflecteur 6 pour protéger une zone localisée dudit train de roulement 1, notamment une pièce 4 (non illustrée ici), de toute collision avec un obstacle extérieur 5 représenté ici sur la chaussée 3.

Le déflecteur 6 est solidaire du train de roulement 1 et présente une surface de protection 8 formant bouclier par rapport à la pièce 4 à protéger. Cette surface de protection 8 est orientée vers la direction longitudinale X et vers la chaussée 3.

Dans cet exemple, la surface de protection est orientée dans le sens de la marche arrière du véhicule 2 de sorte que lorsque le véhicule recule, un obstacle extérieur 5 qui serait positionné sur la chaussée ne viendrait pas endommager la ou les pièces 4 à protéger mais viendrait en collision directement sur cette surface de protection 8.

Du fait de son orientation, la surface de protection 8 est positionnée de sorte à être sensiblement oblique par rapport à la chaussée 3 et orientée du côté de ladite chaussée. De cette manière, lorsqu'un obstacle entre en collision avec le déflecteur 6, les forces de l'obstacle extérieur 5 sur le déflecteur 6 présentent une orientation perpendiculaire à ladite surface de protection et se décomposent en une composante horizontale suivant la direction longitudinale X et en une composante verticale suivant l'axe vertical Z.

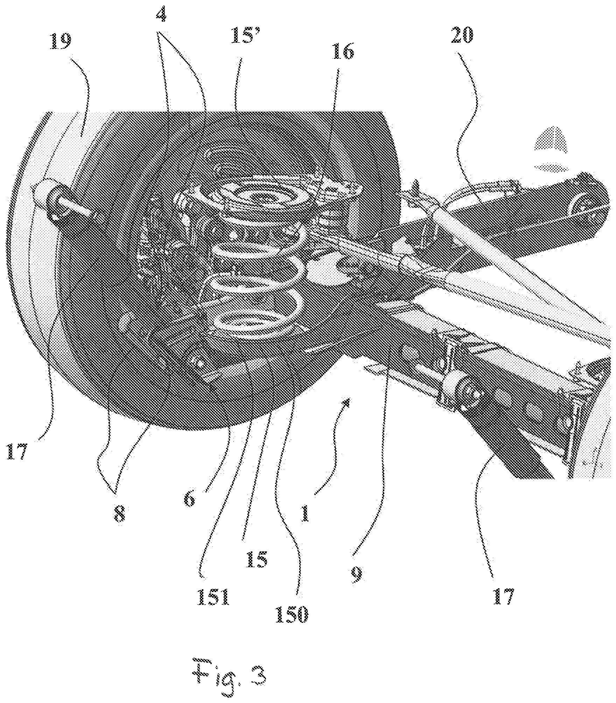

La composante horizontale de la force est donc diminuée et la composante verticale est amortie par le système de suspension. Un tel amortissement est particulièrement efficace lorsque l'ensemble de l'essieu arrière est amorti, comme illustré dans les figures 2 et 3.

Dans le cas où l'obstacle extérieur 5 est solidaire de la chaussée, par exemple lorsque l'obstacle extérieur est un plot urbain ou un nid de poule, le véhicule peut poursuivre sa course, ici sa marche arrière, en passant par dessus ledit obstacle 5, les dommages liés à l'impact étant substantiellement diminués grâce à la surface de protection 8.

En effet, la surface de protection 8 forme une surface de glissement avec laquelle l'obstacle va glisser à partir de sa collision sans freiner le véhicule 2 et sans endommager le train de roulement 1.

La nature et les propriétés d'un tel frottement de glissement entre deux surfaces dépendent d'un certain nombre de paramètres essentiels et en substance ici de la géométrie de la surface de protection 8 ainsi que celle de l'obstacle extérieur 5, de la vitesse du déplacement du véhicule 2 par rapport audit obstacle extérieur 5 et également du comportement vibratoire du système de suspension assurant l'amortissement du choc par rapport au véhicule 2.

De préférence, la surface de protection 8 est plane. Ceci permet de pouvoir assurer un glissement efficace pour des géométries variées de l'obstacle extérieur 5.

Par ailleurs, la surface de protection 8 du déflecteur 6 forme de préférence un angle α compris entre 25 et 65 degrés et de préférence encore entre 35 et 45 degrés par rapport à la chaussée lorsque le train de roulement 1 est dans une position stable, c'est à dire lorsqu'il n'est pas sollicité par un obstacle extérieur 5. Une surface inclinée d'un angle α égale à 40 degrés par rapport à la chaussée 3 permettra de pouvoir assurer une meilleure répartition des composantes verticale et horizontale de la force résultante de la collision dudit obstacle 5 sur la surface de protection 8. Ceci permet également d'assurer un effet de glissement efficace pour des géométries différentes d'obstacles extérieurs 5.

Un tel glissement a pour effet de diminuer la composante horizontale de la force exercée sur le train de roulement 1 limitant par conséquent les risques de dégradation dudit train de roulement.

Les figures 2 et 3 montrent des vues d'un train de roulement 1 selon un mode de réalisation particulier correspondant à une architecture similaire à celle décrite figure 1.

Est représenté un train de roulement 1 arrière d'un véhicule 2 comprenant un essieu 9 solidaire latéralement de deux bras oscillants 20 portant de part et d'autre dudit train de roulement, les roues 19 du véhicule 2, les bras oscillants étant en liaison pivot avec la caisse du véhicule 2 (non visible sur ces figures).

Le train de roulement 1 comprend un système de suspension comportant de part et d'autre de l'essieu 9 et au voisinage de chacun des bras oscillants :
- un ressort de suspension 16, formé d'un ressort à spirale maintenu sensiblement suivant un axe vertical Z entre deux flasques 15, 15' : un flasque inférieur 15 solidaire du train de roulement 1 et un flasque supérieur 15' solidaire de la caisse du véhicule 2 ; et
- un vérin amortisseur 17 présentant une extrémité solidaire du train de roulement 1 et une autre extrémité solidaire de la caisse du véhicule 2.

La structure complète formée par le train de roulement 1 arrière est donc mobile élastiquement en rotation par rapport à la caisse du véhicule 2. Lorsque ledit train de roulement 1 est sollicité, par exemple en cas d'irrégularité de la chaussée et/ou d'obstacle extérieur 5, le système de suspension permet d'isoler la caisse du véhicule 2 des vibrations résultantes par dissipation d'énergie.

Le train de roulement 1 présente ici deux déflecteurs 6, chacun présentant :
- une base 7 formant interface de solidarisation pour sa solidarisation audit train de roulement 1 ; et
- deux surfaces de protection 8 formant bouclier par rapport à une pièce 4 à protéger, ladite surface de protection 8 étant orientée vers une direction longitudinale X et vers la chaussée 3 (non illustrée dans ces figures).

Chacun des déflecteurs 6 est solidaire de l'essieu 9 et permet de protéger à la fois une extrémité d'un vérin amortisseur 17 en formant bouclier et, dans une moindre mesure par rapport au vérin amortisseur 17, le flasque 15 inférieur du ressort de suspension 16. Les pièces environnantes sont également protégées dans une moindre mesure, cette protection dépendant des dimensions de l'obstacle extérieur 5. Ces déflecteurs 6 permettent en outre, de part l'orientation de leur surface de protection 8, de diminuer la contrainte résultante du choc qui est transmise au train de roulement.

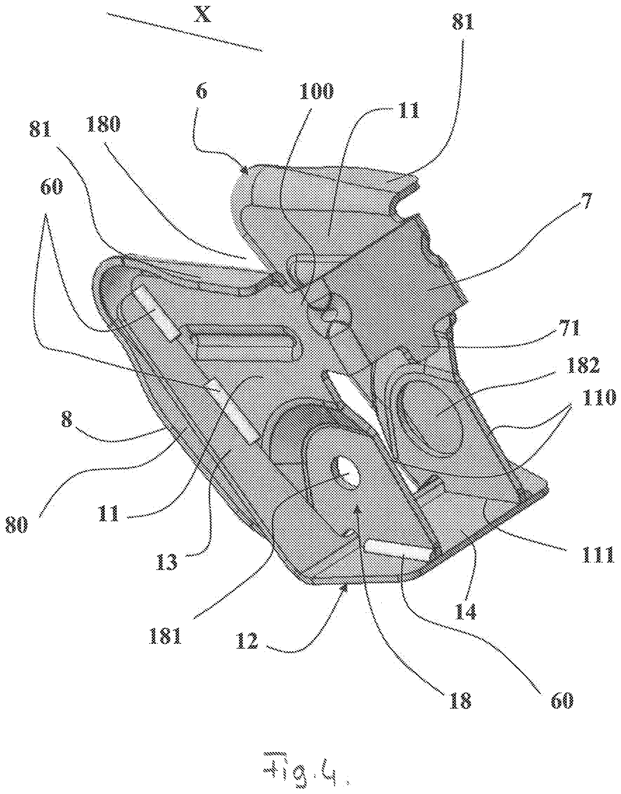

Chacun des deux déflecteurs 6 est formé en un seul tenant et présente une paroi arrière formant base 7 et deux surfaces de protection, 8 chacune des surfaces de protection 8 étant portée par une paroi latérale 11 reliée rigidement à la base 7 (voir figure 4).

Dans ce mode de réalisation, le déflecteur forme également une pièce intermédiaire permettant la liaison mécanique du vérin amortisseur 17 au train de roulement 1. De cette manière le déflecteur 6 remplit une double fonction de protection et de fixation du vérin amortisseur 17, ceci limitant par conséquent l'usinage du train de roulement 1 du fait que l'usinage d'une interface spécifique n'est pas nécessaire. Ceci permet également de limiter l'encombrement et le poids du ou des déflecteur (s) .

Le déflecteur 6 forme une chape 18 pour recevoir une extrémité du vérin amortisseur 17. En effet, les parois latérales 11 et la base 7 délimitent ensemble un espace intérieur 180 à l'intérieur duquel peut venir loger une extrémité du vérin amortisseur 17. D'autre part, l'une des parois latérales 11 présente un orifice 181, l'autre des parois latérales 11 présentant un trou débouchant 182 sur l'espace intérieur formé par le déflecteur 6. L'orifice 181 et le trou débouchant 182 étant situés en vis à vis de sorte qu'ils soient positionnés sensiblement coaxialement par rapport à un axe de pivotement du vérin d'amortissement par rapport au déflecteur 6, l'extrémité du vérin amortisseur 17 étant agencée pour coopérer dans cet orifice 181 et ce trou débouchant 182.

Par ailleurs, chacun des deux déflecteurs 6 est solidarisé à l'un des flasques 15 permettant le maintien du ressort 16 de suspension, en particulier le flasque inférieur 15.

La solidarisation de chacun des déflecteurs 6 avec le train de roulement 1 est amovible de sorte à permettre le remplacement de cette seule pièce en cas d'endommagement dudit déflecteur 6 et non celui du train de roulement 1 complet.

La figure 4 offre une vue plus complète et détaillée de ce déflecteur 6 mis en œuvre dans les figures 2 et 3.

En particulier, la base 7 présente une saillie 71 de fixation destinée à coopérer avec le flasque 15 formant butée du ressort de suspension 16 du train de roulement 1.

Plus précisément, le flasque 15 utilisé comme support de déflecteur 6 présente une bordure périphérique 150 dressé sensiblement verticalement, cette bordure présentant une surface intérieure orientée vers l'intérieur du flasque et une surface extérieure opposée, les surfaces intérieure et extérieure délimitant son épaisseur.

Dans cette configuration, le déflecteur 6 est agencé pour que, dans une position de coopération, la saille 71 soit en contact et en butée contre la surface intérieure du flasque 15 et des rebords 110 arrières des parois latérales 11 soient en contact et en butée contre la surface extérieure du flasque 15.

En effet, chacune des parois latérales 11 s'étend dans un plan orthogonal à celui de la base 7, et sont délimitées par :
- un rebord arrière 110 situé du côté de la base 7,
- un rebord avant à partir duquel se prolonge, de manière continue et de façon orthogonale vers l'extérieur par rapport à ladite paroi latérale 11 et à l'espace 180, une paroi 80 portant l'une des surfaces de protection 8,
- un rebord inférieur 111 ; et
- un rebord supérieur à partir duquel se prolonge latéralement des ailes supérieures 81. Ces dernières permettent de renforcer mécaniquement le déflecteur 6. Les ailes supérieures 81 évitent également que le déflecteur ne se vrille en cas de choc. Elles n'entrent pas en contact avec l'obstacle.

La paroi arrière formant base 7 du déflecteur 6 est reliée rigidement au rebord arrière 110 de chacune des parois latérales 11 par des pattes 100 formant entretoises. De cette manière la base 7 est maintenue à distance des rebords arrière 110 des parois latérales 11, cette distance étant choisie sensiblement égale à l'épaisseur de la bordure périphérique 150 du flasque 15.

Les parois latérales 11, la base 7, les pattes 100 formant entretoises et les parois 80 portant les surfaces de protection 8 forment un ensemble monobloc résultant d'une découpe d'emboutissage d'une seule et même tôle en acier.

La base 7 est sensiblement plane et parallèle à un plan contenant les rebords arrière 110 de chacune des parois latérales.

En plus de la saille 71 en contact et en butée contre la surface intérieure du flasque 15, et des rebords arrières 110 des parois latérales 11 en contact et en butée contre la surface extérieure du flasque 15, dans la position de coopération, les pattes 100 formant entretoises sont également en prise et en butée contre un rebord 151 de la bordure périphérique 150.

Par ailleurs, la saillie 71 de fixation est dirigée dans une direction sensiblement verticale et opposée au vérin amortisseur 17 de sorte que la contrainte sensiblement verticale exercée par le vérin sur le déflecteur maintienne le déflecteur contre le rebord périphérique 150 du flasque et en coopération avec lui.

Selon une variante de la mise en œuvre du moyen de fixation et de manière préférée, la fixation entre le déflecteur 6 et le train de roulement 1 est assurée par une vis et un écrou.

Le déflecteur 6 comporte une pièce de renfort 12, la pièce de renfort 12 présentant deux ailes 13 reliées entre elles par une paroi transversale 14, les ailes 13 formant une rampe d'appui pour la surface de protection 8.

La pièce de renfort 12 est soudée au déflecteur 6. En particulier
- les rebords inférieurs 111 des parois latérales 11 sont reliées rigidement par des points de soudure 60 à la paroi transversale 14 de la pièce de renfort 12 ; et
- les ailes 13 de la pièce de renfort 12 sont reliées chacune rigidement par des points de soudure 60 à l'une des parois latérales 11 au voisinage de son rebord avant et du côté extérieur à l'espace délimité par le déflecteur 6 de sorte que les parois 80 portant les surfaces de protection 8 soient au moins en partie superposées aux ailes 13 formant ainsi rampe d'appui.

Cette pièce de renfort 12 permet de renforcer le déflecteur 6 dans sa tenue mécanique en cas de collision avec un obstacle extérieur 5.

Un tel déflecteur 6 offre une solution facile à mettre en œuvre et peu couteuse permettant une protection améliorée d'un train de roulement.

L'invention est décrite dans ce qui précède à titre d'exemple. Il est entendu que l'homme du métier est à même de réaliser différentes variantes de réalisation de l'invention sans pour autant sortir du cadre de l'invention.

Par exemple, il est entendu qu'un tel déflecteur peut être agencé également sur un train de roulement avant, la surface de protection pouvant être orientée dans le sens de la marche avant et/ou dans le sens de la marche arrière en fonction de l'architecture du train de roulement et des pièces à protéger.

## Revendications

1. Train de roulement (1) pour un véhicule (2) automobile destiné à rouler suivant une direction longitudinale (X) sur une chaussée (3), le train de roulement (1) comprenant au moins une pièce (4) à protéger d'un obstacle extérieur (5), le train de roulement (1) comprenant un déflecteur (6) pour protéger ladite pièce (4) de toute collision avec l'obstacle extérieur (5), ledit déflecteur (6) présentant :
- une base (7) formant interface de solidarisation pour sa solidarisation audit train de roulement (1) ; et
- au moins une surface de protection (8) formant bouclier par rapport à la pièce (4) à protéger, ladite surface de protection (8) étant orientée vers une direction longitudinale (X) et vers la chaussée (3), la pièce (4) à protéger étant un vérin amortisseur (17), le déflecteur (6) formant une chape (18) pour recevoir une extrémité du vérin amortisseur (17), **caractérisé en ce que** le déflecteur (6) comporte une pièce de renfort (12), la pièce de renfort (12) permettant de renforcer le déflecteur (6) dans sa tenue mécanique en cas de collision avec l'obstacle extérieur (5), la pièce de renfort présentant deux ailes (13) reliées entre elles par une paroi transversale (14), les ailes (13) formant une rampe d'appui pour la surface de protection (8).

2. Train de roulement (1) selon la revendication 1, **caractérisé en ce qu'**il forme un train arrière du véhicule (2) .

3. Train de roulement selon la revendication 1 ou 2, **caractérisé en ce qu'**il comprend un essieu (9), le déflecteur (6) étant solidaire dudit essieu (9).

4. Train de roulement (1) selon l'une quelconque des revendications précédentes, **caractérisé en ce que** le déflecteur (6) comprend une paroi arrière formant base (7) et deux surfaces de protection, (8) chacune des surfaces de protection (8) étant portée par une paroi latérale (11) reliée rigidement à la base (7).

5. Train de roulement (1) selon l'une quelconque des revendications précédentes, **caractérisé en ce que** le déflecteur (6) est formé en un seul tenant.

6. Train de roulement (1) selon l'une quelconque des précédentes, **caractérisé en ce que** la surface de protection (8) est plane.

7. Train de roulement (1) selon l'une quelconque des revendications précédentes, **caractérisé en ce que** le déflecteur (6) est amovible par rapport audit train de roulement (1).

8. Train de roulement (1) selon l'une quelconque des revendications précédentes, **caractérisé en ce que** la pièce (4) à protéger est un flasque (15) pour un ressort de suspension (16).

9. Train de roulement (1) selon l'une quelconque des revendications précédentes, **caractérisé en ce que** la base (7) présente une saillie (71) de fixation destinée à coopérer avec le flasque (15) formant butée du ressort de suspension (16) du train de roulement (1).

10. Train de roulement (1) selon la revendication 10, **caractérisé en ce que** la saillie (71) de fixation est dirigée dans une direction sensiblement opposée au vérin amortisseur (17).

11. Véhicule automobile (2) **caractérisé en ce qu'**il comprend un train de roulement (1) selon l'une quelconque des revendications précédentes.

## Patentansprüche

1. Fahrwerk (1) für ein Kraftfahrzeug (2), welches dazu bestimmt ist, in einer Längsrichtung (X) auf einer Fahrbahn (3) zu fahren, wobei das Fahrwerk (1) wenigstens ein Teil (4) umfasst, das vor einem äußeren Hindernis (5) zu schützen ist, wobei das Fahrwerk (1) einen Ablenker (6) umfasst, um das Teil (4) vor jeder Kollision mit dem äußeren Hindernis (5) zu schützen, wobei der Ablenker (6) aufweist:
- ein Unterteil (7), das eine Verbindungsschnittstelle für seine feste Verbindung mit dem Fahrwerk (1) bildet; und
- wenigstens eine Schutzfläche (8), die einen Schutzschild in Bezug auf das zu schützende Teil (4) bildet, wobei die Schutzfläche (8) in einer Längsrichtung (X) und zu der Fahrbahn (3) hin ausgerichtet ist; und
wobei das zu schützende Teil (4) ein Dämpfungszylinder (17) ist, wobei der Ablenker (6) ein Gabelstück (18) zum Aufnehmen eines Endes des Dämpfungszylinders (17) bildet,
**dadurch gekennzeichnet, dass** der Ablenker (6) ein Verstärkungsteil (12) aufweist, wobei das Verstärkungsteil (12) ermöglicht, den Ablenker (6) im Falle einer Kollision mit dem äußeren Hindernis (5) in seiner mechanischen Festigkeit zu verstärken, wobei das Verstärkungsteil zwei Flügel (13) aufweist, die durch eine Querwand (14) miteinander verbunden sind, wobei die Flügel (13) eine Stützrampe für die Schutzfläche (8) bilden.

2. Fahrwerk (1) nach Anspruch 1, **dadurch gekennzeichnet, dass** es eine Hinterachse des Fahrzeugs (2) bildet.

3. Fahrwerk nach Anspruch 1 oder 2, **dadurch gekennzeichnet, dass** es eine Achse (9) umfasst, wobei der Ablenker (6) mit der Achse (9) fest verbunden ist.

4. Fahrwerk (1) nach einem der vorhergehenden Ansprüche, **dadurch gekennzeichnet, dass** der Ablenker (6) eine hintere Wand, die das Unterteil (7) bildet, und zwei Schutzflächen (8) umfasst, wobei jede der Schutzflächen (8) von einer seitlichen Wand (11) getragen wird, die starr mit dem Unterteil (7) verbunden ist.

5. Fahrwerk (1) nach einem der vorhergehenden Ansprüche, **dadurch gekennzeichnet, dass** der Ablenker (6) aus einem Stück ausgebildet ist.

6. Fahrwerk (1) nach einem der vorhergehenden Ansprüche, **dadurch gekennzeichnet, dass** die Schutzfläche (8) eben ist.

7. Fahrwerk (1) nach einem der vorhergehenden Ansprüche, **dadurch gekennzeichnet, dass** der Ablenker (6) von dem Fahrwerk (1) lösbar ist.

8. Fahrwerk (1) nach einem der vorhergehenden Ansprüche, **dadurch gekennzeichnet, dass** das zu schützende Teil (4) ein Flansch (15) für eine Aufhängungsfeder (16) ist.

9. Fahrwerk (1) nach einem der vorhergehenden Ansprüche, **dadurch gekennzeichnet, dass** das Unterteil (7) einen Befestigungsvorsprung (71) aufweist, der dazu bestimmt ist, mit dem Flansch (15) zusammenzuwirken, der einen Anschlag der Aufhängungsfeder (16) des Fahrwerks (1) bildet.

10. Fahrwerk (1) nach Anspruch 10, **dadurch gekennzeichnet, dass** der Befestigungsvorsprung (71) in eine Richtung gerichtet ist, die im Wesentlichen zu dem Dämpfungszylinder (17) entgegengesetzt ist.

11. Kraftfahrzeug (2), **dadurch gekennzeichnet, dass** es ein Fahrwerk (1) nach einem der vorhergehenden Ansprüche umfasst.

## Claims

1. Running gear (1) for a motor vehicle (2) intended to run in a longitudinal direction (X) on a roadway (3), the running gear (1) comprising at least one component (4) to be protected from an external obstacle (5), the running gear (1) comprising a deflector (6) for protecting said component (4) from any collision with the external obstacle (5), said deflector (6) having:
- a base (7) forming a securing interface for securing it to said running gear (1); and
- at least one protective surface (8) forming a shield with respect to the component (4) to be protected, said protective surface (8) being oriented in a longitudinal direction (X) and towards the roadway (3),
the component (4) to be protected being a damping cylinder (17), the deflector (6) forming a clevis (18) for receiving one end of the damping cylinder (17), **characterized in that** the deflector (6) has a reinforcing component (12), the reinforcing component (12) making it possible to reinforce the deflector (6) in terms of its mechanical integrity in the event of a collision with the external obstacle (5), the reinforcing component having two wings (13) connected together by a transverse wall (14), the wings (13) forming a support ramp for the protective surface (8).

2. Running gear (1) according to Claim 1, **characterized in that** it forms a rear axle set of the vehicle (2).

3. Running gear according to Claim 1 or 2, **characterized in that** it comprises an axle (9), the deflector (6) being secured to said axle (9).

4. Running gear (1) according to any one of the preceding claims, **characterized in that** the deflector (6) comprises a rear wall forming a base (7) and two protective surfaces (8), each of the protective surfaces (8) being carried by a lateral wall (11) connected rigidly to the base (7).

5. Running gear (1) according to any one of the preceding claims, **characterized in that** the deflector (6) is formed in one piece.

6. Running gear (1) according to any one of the preceding claims, **characterized in that** the protective surface (8) is flat.

7. Running gear (1) according to any one of the preceding claims, **characterized in that** the deflector (6) is removable from said running gear (1).

8. Running gear (1) according to any one of the preceding claims, **characterized in that** the component (4) to be protected is a flange (15) for a suspension spring (16) .

9. Running gear (1) according to any one of the preceding claims, **characterized in that** the base (7) has a fastening protrusion (71) intended to engage with the flange (15) forming a stop for the suspension spring (16) of the running gear (1).

10. Running gear (1) according to Claim 10, **characterized in that** the fastening protrusion (71) is directed in a direction substantially opposite to the damping cylinder (17).

11. Motor vehicle (2), **characterized in that** it comprises a running gear (1) according to any one of the preceding claims.
